(19) Europäisches Patentamt
European Patent Office
Office européen des brevets

(11) **EP 4 697 323 A1**

(12) **EUROPEAN PATENT APPLICATION**

(43) Date of publication:
**18.02.2026 Bulletin 2026/08**

(21) Application number: **24194003.0**

(22) Date of filing: **12.08.2024**

(51) International Patent Classification (IPC):
**G10L 19/00** (2013.01)  **G10L 25/30** (2013.01)
**G10L 19/10** (2013.01)  G06N 3/02 (2006.01)
G10L 25/90 (2013.01)  G10L 19/02 (2013.01)
G10L 19/04 (2013.01)  G10L 19/09 (2013.01)

(52) Cooperative Patent Classification (CPC):
**G10L 19/00; G06N 3/045; G10L 19/10;**
**G10L 25/30;** G06N 3/02; G10L 19/0208;
G10L 19/04; G10L 19/09; G10L 25/90

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Koninklijke Philips N.V.**
**5656 AG Eindhoven (NL)**

(72) Inventors:
• **SCHUIJERS, Erik Gosuinus Petrus**
**Eindhoven (NL)**
• **KECHICHIAN, Patrick**
**Eindhoven (NL)**
• **RAVI, Akshaya**
**Eindhoven (NL)**

(74) Representative: **Philips Intellectual Property &**
**Standards**
**High Tech Campus 52**
**5656 AG Eindhoven (NL)**

(54) **GENERATION AND PROCESSING OF ENCODED AUDIO DATA SIGNAL**

(57)    An audio apparatus receives an encoded audio data signal comprises a latent space feature set representing properties of a signal component of an audio signal. A trained artificial neural network (205) generates a frequency, and typically a pitch, parameter reflecting a pitch property of the signal component of the audio signal from the latent space feature set. A pulse sequence generator (207) generates a pulse sequence having properties dependent on the pitch parameter. A shaping circuit (209) generates a first audio signal from the pulse sequence by applying a spectro-temporal shaping to the pulse sequence with the spectro-temporal shaping being dependent on the latent space feature set. An output circuit (211) arranged to generate an output signal from the first audio signal. An encoding apparatus may generate the latent space feature set using a trained artificial neural network receiving parameters describing sinusoids/harmonics/harmonic grids as inputs.

**FIG. 2**

EP 4 697 323 A1

**Description**

FIELD OF THE INVENTION

The invention relates to generation and processing of an encoded audio data signal, and in particular, but not exclusively, to an encoded audio data signal representing an audio signal using a latent space features set with artificial neural networks.

BACKGROUND OF THE INVENTION

Audio applications have become numerous and widespread and increasingly form part of many audiovisual experiences. Indeed, new and improved audio experiences and applications are continuously being developed resulting in increased demands on audio processing and rendering. A lot of research and development effort has focused on providing efficient and high-quality audio encoding and audio decoding.

Recently it has been proposed to utilize artificial neural networks as part of audio encoding and/or audio decoding. However, how exactly to include such artificial neural networks and for which specific functions and in which context is a challenging issue with high impact on the performance and implementation properties, such as specifically requirements for computational resources.

A number of different approaches have been proposed which provide different advantages and disadvantages. However, whereas different approaches have been found to be useful and advantageous in many applications and for many signals, they have also been found to not be ideal in all embodiments and for all scenarios. For example, it has been found to result in some audio quality degradation and a suboptimal signal being reconstructed at the decoder even when well-trained networks are employed. A particular issue for most audio encoding and decoding approaches utilizing neural networks is that they tend to have a high degree of complexity and require substantial computational resources. The artificial neural networks tend to be relatively large in order to achieve the desired audio encoding and decoding quality resulting in a large number of computations and calculations being required. This is particularly problematic for devices with lower computational resources such as portable devices (e.g. smartphones). Indeed, many existing approaches are too complex and resource demanding to make real time processing feasible on many portable devices.

Hence, an improved approach would be advantageous. In particular, an approach allowing increased flexibility, an improved performance, increased audio quality, improved audio quality to data rate and/or complexity, and/or resource usage trade-off, reduced complexity and/or resource usage, improved audio signal encoding/decoding, reduced computational load, facilitated implementation, improved dynamic audio processing and reproduction, and/or an improved audio experience would be advantageous.

SUMMARY OF THE INVENTION

Accordingly, the invention seeks to preferably mitigate, alleviate or eliminate one or more of the above mentioned disadvantages singly or in any combination.

According to an aspect of the invention, there is provided an audio apparatus comprising: a receiver arranged to receive an encoded audio data signal comprising a representation of an audio signal, the encoded audio data signal including a latent space feature set representing properties of a signal component of the audio signal; a first trained artificial neural network arranged to generate frequency parameters reflecting/representing/describing/characterizing frequency properties of the signal component of the audio signal, the first trained artificial neural network arrangement having input nodes receiving the latent space feature set and output nodes providing the frequency parameters; a pulse sequence generator arranged to generate a pulse sequence, the pulse sequence having properties dependent on the frequency parameters; a shaping circuit arranged to generate a first audio signal from the pulse sequence, the generation including applying a spectro-temporal shaping to the pulse sequence, the shaping circuit being arranged to adapt the spectro-temporal shaping dependent on the latent space feature set; and an output circuit arranged to generate an output signal from the first audio signal.

The frequency parameters may reflect/represent/describe/characterize frequency properties for a sinusoidal component of the first signal component, such as specifically a fundamental or harmonic frequency of the sinusoidal component of the first signal component. In many embodiments, the frequency parameters may specifically be pitch parameters representing/describing/characterizing pitch properties of the signal component of the audio signal.

In many embodiments, the first trained artificial neural network is arranged to generate pitch parameters reflecting/representing/describing/characterizing pitch properties of the signal component of the audio signal, the first trained the first trained artificial neural network arrangement having input nodes receiving the latent space feature set and output nodes providing the pitch parameters artificial neural network arrangement having input nodes receiving the latent space feature set and output nodes providing the pitch parameters.

The approach may provide an improved audio experience in many embodiments. For many signals and scenarios, the approach may provide improved processing and specifically decoding of an audio signal allowing improved audio reproduction and generation by a decoder audio apparatus based on the latent space feature set. An encoded audio signal with a substantially reduced data rate can often be achieved for many audio signals.

The approach may provide a particularly advantageous arrangement which may in many embodiments and scenarios allow a facilitated and/or improved possibility of utilizing artificial neural networks in audio processing, including audio encoding and decoding. The approach may allow an advantageous employment of artificial neural network(s) in processing/decoding an encoded audio data signal representing an audio output signal. The encoded audio data signal may be particularly suitable for reproduction of the audio output signal using artificial neural networks.

The approach may provide an efficient implementation and may in many embodiments allow a reduced complexity and/or resource usage.

The approach may in particular implement a hybrid approach combining the use of parametric representation of pitch/sinusoidal/harmonic signal components with the usage of one or more targeted and specific trained artificial neural network(s). The approach may allow a structure that facilitates the usage of, typically smaller, trained artificial neural networks to provide specific operations and functions that allow improved overall quality of the decoding while requiring only smaller and lower complexity networks. The approach may avoid the necessity and requirement for large, complex, and resource demanding neural networks with a large number of nodes performing a large number of computations as is known from other decoding approaches, such as approaches using end to end neural networks.

The approach may in many embodiments provide an improved trade-off between resource usage and (in particular neural network) complexity on one hand, and audio quality and data rate on the other hand.

The artificial neural network(s) may be trained artificial neural network(s) trained by training data including training audio signals and a cost function reflecting a difference between a desired outcome and an outcome resulting from the operation of the trained artificial neural network(s).

The audio apparatus may specifically be an encoder audio apparatus.

The receiver may receive the audio signal from any suitable internal or external source. For example, the audio apparatus may include a bitstream receiver for receiving a bitstream comprising the audio signal.

The first trained artificial neural network may be trained to generate the first latent space feature set to reduce a loss function comprising a contribution for a difference between the first signal component and a waveform of a signal generated from the first latent space feature set.

A spectro-temporal shape may be a spectro-temporal envelope, and may specifically be a spectral envelope and a temporal envelope. The latent space feature set may also be referred to as a latent space feature vector.

A latent space may for example be a lower-dimensional space that captures (e.g. important) underlying features or representation of the input data. It may be created by the hidden layers of a neural network and may contain learned representations of the input data that are useful for making predictions or performing tasks. A latent space can often be thought of as an abstract, compressed representation of the input data.

A latent space feature set may be a collection of learned features or representations that are extracted from the input data and encoded within the latent space of a deep learning model.

The latent space feature set may represent sinusoidal/harmonic signal components of the audio signal, and specifically a harmonic grid of the audio signal. The signal component of the audio signal may be a sinusoidal/harmonic signal components of the audio signal, and specifically a harmonic grid of the audio signal. The frequency properties may include a pitch trajectory. The frequency parameters may represent a property of at least one sinusoidal component and/or a harmonic grid.

The pulse sequence may be a pulse train. The pulse sequence property adapted based on the at least one frequency parameter may be a time between pulses in the pulse sequence. A neural network arranged to generate an output may also be referred to as a neural network trained to generate the output.

According to an optional feature of the invention, the shaping circuit comprises a second trained artificial neural network having input nodes arranged to receive the latent space feature set and an output for producing the spectro-temporal shaping.

This may provide a particularly efficient and high performance operation in many scenarios, and may typically result in an improved encoded audio data signal allowing improved audio quality of an audio signal generated from the encoded audio data signal. An improved data rate to audio quality for the encoded audio data signal may be achieved for many signals. It may further provide a highly efficient implementation with reduced complexity and resource usage.

According to an optional feature of the invention, the second trained artificial neural network has input nodes for receiving the pulse sequence and output nodes providing samples of the first audio signal.

This may provide a particularly efficient and high performance operation in many scenarios.

According to an optional feature of the invention, the second trained artificial neural network is arranged to generate a set of time domain gain parameters and the shaping circuit further comprises a scaler for applying a time domain shaping of the first audio signal by a scaling dependent on the time domain gain parameters.

This may provide a particularly efficient and high performance operation in many scenarios.

According to an optional feature of the invention, the audio apparatus comprises an upsampling trained artificial neural network having input nodes arranged to receive the time domain gain parameters and output nodes providing time domain scale factors, and wherein the scaler is arranged to scale samples of the first audio signal by the time domain scale factors.

This may provide a particularly efficient and high performance operation in many scenarios.

According to an optional feature of the invention, the shaping circuit further comprises a synthesis filter arranged to generate an intermediate signal by filtering of the pulse sequence and to generate the first audio signal from the intermediate signal; the second trained artificial neural network being arranged to generate a set of frequency shaping parameters and the synthesis filter being dependent on the frequency shaping parameters.

This may provide a particularly efficient and high performance operation in many scenarios.

According to an optional feature of the invention, the first trained artificial neural network and the second trained artificial neural network are part of a common trained artificial neural network.

This may provide a particularly efficient and high performance operation in many scenarios.

According to an optional feature of the invention, the shaping circuit further comprises a synthesis filter arranged to generate the first audio by filtering the pulse sequence; the second trained artificial neural network being arranged to generate a set of filter parameters and the synthesis filter being dependent on the filter parameters.

This may provide a particularly efficient and high performance operation in many scenarios.

According to an optional feature of the invention, the pulse sequence generator comprises a second upsampling neural network having input nodes for receiving the at least one frequency parameter and output nodes providing upsampled frequency values for at least one of a fundamental frequency and a harmonic frequency, and the pulse sequence generator is arranged to generate the pulse sequence in dependence on the upsampled frequency values.

This may provide a particularly efficient and high performance operation in many scenarios.

In some embodiments, the first trained artificial neural network is a fully connected artificial neural network.

This may provide a particularly efficient and high performance operation in many scenarios.

According to an optional feature of the invention, the latent space feature set represents properties of a first signal component of the audio signal and the encoded audio data signal comprises audio data representing a second signal component of the audio signal and, the second signal component representing a part of the audio signal not represented by the first signal component, and wherein the output circuit is arranged to reconstruct the second signal component by decoding the audio data representing the second signal component, and to generate the output audio signal from a combination of at least the reconstructed second signal component and the first audio signal.

This may provide a particularly efficient and high performance operation in many scenarios.

The residual signal component may be a signal component resulting from extraction of the first signal component from the audio signal.

In some embodiments, the audio data signal comprises data representing encoded audio data for a residual signal being a signal resulting from removing the harmonic grid from the audio signal; and the audio apparatus further comprises: a residual signal circuit arranged to generate a residual signal from the encoded audio data for the residual signal; and the output circuit is arranged to combine the residual signal and the modified pulse sequence to generate the output audio signal.

According to another aspect of the invention, there is provided an audio apparatus comprising: a receiver arranged to receive an audio signal; a signal splitter circuit arranged to divide the audio signal into at least a first signal component and a second signal component, the first signal component comprising sinusoidal signal components; a parameter circuit arranged to generate a set of (typically frequency/pitch) parameters representing the first signal component; a first trained artificial neural network arranged to receive the set of parameters and trained to generate a latent space feature set representing the set of parameters; an encoder circuit arranged to generate encoded audio data representing the second signal component; and an output circuit arranged to generate an encoded audio data signal representing the audio signal, the encoded audio data signal comprising the latent space feature set and the encoded audio data.

According to an optional feature of the invention, the set of parameters comprise at least one of frequency parameters, pitch parameters; pitch trajectory parameters; time domain envelope parameters; and frequency envelope parameters.

According to another aspect of the invention, there is provided a method of operation for an audio apparatus, the method comprising: receiving an encoded audio data signal comprising a representation of an audio signal, the encoded audio data signal including a latent space feature set representing properties of a signal component of the audio signal; a first trained artificial neural network generating frequency parameters reflecting frequency properties of the signal component of the audio signal, the first trained artificial neural network arrangement having input nodes receiving the latent space feature set and output nodes providing the frequency parameters; generating a pulse sequence having properties dependent on the frequency parameters; generating a first audio signal from the pulse sequence by applying a spectro-temporal shaping to the pulse sequence; adapting the spectro-temporal shaping dependent on the latent space feature set; and generating an output signal from the first audio signal.

According to another aspect of the invention, there is provided a method of operation for an audio apparatus, the method comprising: receiving an audio signal; dividing the audio signal into at least a first signal component and a second signal component, the first signal component comprising sinusoidal signal components; generating a set of parameters representing the first signal component; a first trained artificial neural network receiving the set of parameters and generating a latent space feature set representing the set of parameters; generating encoded audio data by audio encoding the second signal component; and generating an encoded audio data signal representing the audio signal to comprise the latent space feature set and the encoded audio data.

These and other aspects, features and advantages of the invention will be apparent from and elucidated with reference to the embodiment(s) described hereinafter.

BRIEF DESCRIPTION OF THE DRAWINGS

Embodiments of the invention will be described, by way of example only, with reference to the drawings, in which

FIG. 1 illustrates some elements of an example of an encoder audio apparatus in accordance with some embodiments of the invention;
FIG. 2 illustrates some elements of an example of a decoder audio apparatus in accordance with some embodiments of the invention;
FIG. 3 illustrates some elements of an example of a decoder audio apparatus in accordance with some embodiments of the invention;
FIG. 4 illustrates some elements of an example of a decoder audio apparatus in accordance with some embodiments of the invention;
FIG. 5 illustrates an example of elements of a shaping circuit for an exemplary decoder audio apparatus in accordance with some embodiments of the invention;
FIG. 6 illustrates some elements of an example of a decoder audio apparatus in accordance with some embodiments of the invention;
FIG. 7 illustrates some elements of an example of a decoder audio apparatus in accordance with some embodiments of the invention;
FIG. 8 illustrates some elements of an example of an encoder audio apparatus in accordance with some embodiments of the invention;
FIG. 9 illustrates an example of a possible training arrangement for training an artificial neural network arrangement;
FIG. 10 illustrates an example of a neural network structure suitable for implementing an example of an audio apparatus in accordance with some embodiments of the invention;
FIG. 11 illustrates an example of a neuron for an artificial neural network;
FIG. 12 illustrates some elements of a possible arrangement of a processor for implementing elements of an audio apparatus in accordance with some embodiments of the invention.

DETAILED DESCRIPTION OF SOME EMBODIMENTS OF THE INVENTION

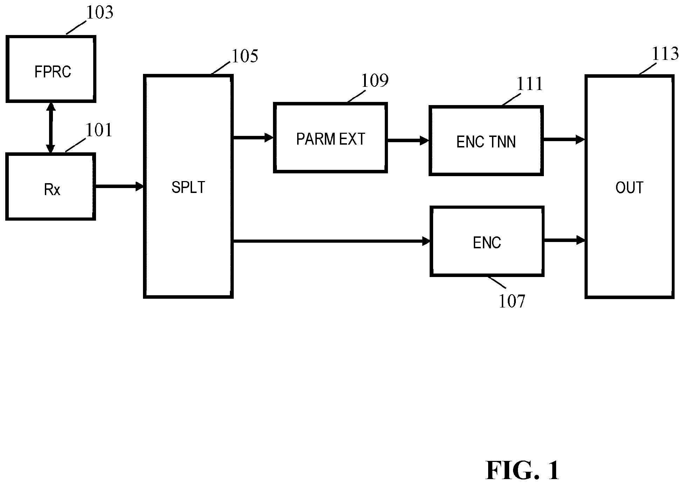

FIG. 1 illustrates an example of an audio apparatus arranged to generate an encoded audio data signal representing an audio signal. The audio apparatus may be an encoding audio apparatus and will henceforth also be referred to as the encoding audio apparatus, or simply as the encoder.

The encoder includes a receiver 101 which is arranged to receive the audio signal to be encoded. The audio signal may typically be received in the time domain and may further typically be processed as a time domain audio signal. However, in some embodiments some or all of the processing may be performed using a frequency domain representation of the audio signal and indeed in many embodiments the processing may include both processing of a time domain and frequency domain representations of the audio signal.

Accordingly, in some embodiments, a frequency representation may be generated for the audio signal and used in the processing. In some embodiments, such frequency domain audio signal may be received from a remote source which may generate a bitstream comprising a frequency representation of the audio signal. In other embodiments, the remote source may generate a time domain representation of the audio signal and a local frequency transformer may be arranged to generate a (time-)frequency representation of the time domain representation. Thus, in some embodiments, the receiver 101 may receive the frequency domain audio signal from an internal source, such as an internal time-to-frequency domain transformer.

In particular, in the example of FIG. 1, the audio apparatus comprises a filter bank 103 which is arranged to generate a frequency (subband) representation of a received time domain audio signal. Thus, in some cases, the audio apparatus may comprise a filter bank 103 that is applied to the audio signal such that it is divided into frequency subbands.

The filter bank may be Quadrature Mirror Filter (QMF) bank or may e.g. be implemented by a Fast Fourier Transform (FFT), but it will be appreciated that many other filter banks and approaches for dividing an audio signal into a plurality of subband signals are known and may be used. The filterbank may specifically be a complex-valued pseudo QMF bank, resulting in e.g. 32 or 64 complex-valued sub-band signals. In many embodiments, a critically sampled filterbank such as a Modified Discrete Cosine Transform, MDCT, may be used.

The processing may be performed in time segments or time slots. In most embodiments, the audio signal is divided into time intervals/segments. For example, the audio signal may be divided into overlapping time segments of e.g. 2048, 1024, or 512 samples. In case where a critically sampled frequency representation such as the MDCT is used, such segments may then be processed to generate samples for e.g. 1024, 512 or 256 subbands.

In some embodiments, the subbands are generated to have the same bandwidth but in other embodiments subbands are generated to have different bandwidths, e.g. reflecting the sensitivity of human hearing to different frequencies.

The encoder comprises a signal splitter circuit 105 that divides the audio signal into at least a first signal component and a second signal component. In many embodiments, the second signal component may be generated as a residual signal of the audio signal with the residual signal being the remaining part after extraction/subtraction of the first signal component from the audio signal.

Different approaches, criteria, and algorithms for splitting the audio signal may be used in different embodiments depending on the specific preferences and requirements of the individual embodiment. In many embodiments, specific signal component with specific properties may be extracted, such as sinusoids, harmonics etc.

In many cases, the signal splitter circuit 105 may be arranged to generate the first signal component to include sinusoidal signal components and with the second signal component then being generated by subtracting the first signal component from the input audio signal, i.e. it may be generated as the residual signal after extraction of the first signal component.

In many embodiments, the signal splitter circuit 105 may be arranged to generate the first signal component as a combination of the (detected) sinusoidal and/or harmonic signal components of the audio signal.

Specifically, the signal splitter circuit 105 may split an input audio signal $x[n]$ into two parts, namely a first sinusoidal/harmonic part $xa[n]$ and a second (non-deterministic part) $x_n[n]$. The goal of the split may specifically be to create two signals $x_d[n]$ and $x_n[n]$, such that $x_d[n]+x_n[n]=x[n]$. The sinusoidal/harmonic part represents that part of the signal having specific sinusoidal/harmonic properties. This may typically comprise/consist of elements such as sinusoidal peaks and/or harmonic grids (consisting of a grid of harmonic peaks). The residual part may then indicate the remaining part of the audio signal, and thus specifically may represent non-sinusoidal/harmonic components of the audio signal. The split can in many embodiments be achieved by traditional parametric methods such as peak picking in the frequency domain to find the sinusoidal part and using the remaining residual signal as the residual part (ref. e.g. Y. Stylianou, "Efficient Decomposition of Speech Signals Into a Deterministic and a Stochastic Part," Fourth International Symposium on Signal Processing and Its Applications, Gold Coast, QLD, Australia, 1996, pp. 5-8.). In some embodiments, the signal splitter circuit 105 may itself include a trained artificial neural network which is trained to achieve such separation (see e.g. Zheng, Chengyu, et al. "Interactive speech and noise modeling for speech enhancement." Proceedings of the AAAI Conference on Artificial Intelligence. Vol. 35. No. 16. 2021).

In some embodiments, the splitting may be performed in the frequency- or subband-domain, e.g. by processing/analyzing frequency/subband signals generated by the filter bank 103.

The signal splitter circuit 105 may split into a harmonics signal and a residual signal. For example, in the context of speech coding, this signal split would result in more of the voiced and unvoiced segments ending up in the harmonics and residual branches of the encoder, respectively. As an example, the signal splitter circuit 105 may proceed to first segment the signal into frames. Then each frame is converted to the frequency domain, e.g. via an FFT, resulting in the so-called Short-Time Fourier Transform (STFT) representation (or alternatively/equivalently the filter bank 103 may generate the frequency representation). For each frame, a peak picking algorithm may extract sinusoids. After all peaks are extracted, the peaks are analyzed to check whether they represent a harmonic grid. The corresponding extracted sinusoids may then represent the first signal component and the residual signal following the extraction of the sinusoids may make up the residual signal.

In some embodiments, the splitter circuit 105 may operate on a speech or speech-like signal and may perform an operation akin to a voiced/unvoiced split of speech into such components. In some such cases, the input signal to the encoder and the splitter circuit 105 (particularly in a communication setting) may have been preprocessed by e.g. a speech enhancement system that may perform beamforming/noise suppression/ dereverberation etc.

The encoder audio apparatus further comprises a residual signal encoder 107 which is arranged to encode the residual signal component to generate encoded audio data. It will be appreciated that any suitable audio encoder and audio encoding format may be used, including for example techniques used in conventional standardized audio encoders such as MP3, FLAC, AAC, etc.

The encoder audio apparatus further comprises a parameter circuit 109 which is coupled to the signal splitter circuit 105 and which receives the first signal component, i.e. it receives the sinusoidal/harmonic grid signal from the signal splitter circuit 105. In some cases, the representation of the first signal component received by the parameter circuit 109 may be the (or at least some) properties of detected sinusoids, such as a frequency, phase, and/or level of the detected sinusoids.

The parameter extraction circuit 109 is arranged to determine a set of parameter values that represents/describes/characterizes the first signal component, and specifically a frequency property thereof, such as a frequency of a sinusoidal component of the first signal component. As will be described in more detail later, the parameters may specifically be gain parameters g, pitch parameters p, and spectral parameters f. At least some of the parameters may represent information indicative of a spectro-temporal envelope/shape for the first signal component and/or a frequency of a sinusoid component (and specifically a pitch/fundamental frequency).

It will be appreciated that in some embodiments, the functionality of the signal splitter circuit 105 and the parameter extraction circuit 109 may be combined/shared. For example, if the signal splitting of the signal splitter circuit 105 includes a determination and detection of sinusoids and harmonics, the parameter values for these may be directly used by the parameter extraction circuit 109. Specifically, a detection of e.g. a frequency or level of a sinusoid may both be used by the signal splitter circuit 105 to determine the first signal component and/or by the parameter extraction circuit to determine the parameters for the sinusoid, and thus for the first signal component.

The parameter circuit 109 is coupled to an encoder trained artificial neural network 111 which is arranged to determine a latent space feature set representing the parameters. The encoder trained artificial neural network 111 has input nodes receiving the set of parameters and is trained to generate the latent space feature set representing the received set of parameters. The encoder trained artificial neural network 111 typically has output nodes that directly provide the latent space feature set values.

The encoder trained artificial neural network 111 is coupled to an output circuit 113 which is also coupled to the signal encoder 107. The output circuit 113 receives the latent space feature set and the encoded audio data for the second signal component (i.e. typically the residual signal) from the encoder trained neural network 111 and the residual signal encoder 107 respectively. The output circuit 113 is arranged to generate an encoded audio data signal that comprises the latent space feature set and the encoded audio data. The audio apparatus of FIG. 1 accordingly generates encoded audio data signal that represents the input audio signal by encoded audio data for part of the signal and a latent space feature set for another part of the signal, and specifically for a sinusoidal/harmonics part of the signal.

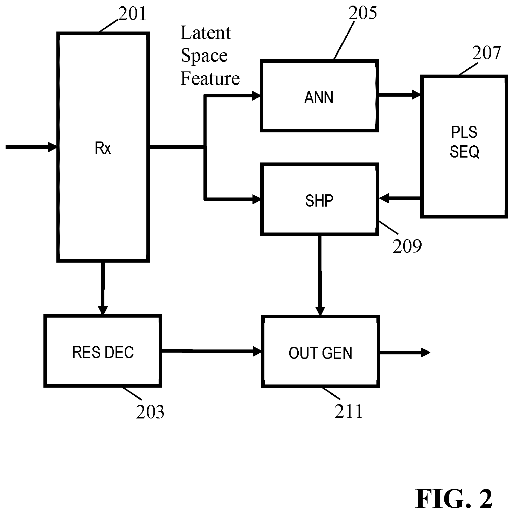

FIG. 2 illustrates an example of an audio apparatus which is arranged to generate an output audio signal from a received encoded audio signal. The audio apparatus may also be referred to as a decoder or synthesizing audio apparatus, or simply as a decoder or synthesizer.

The decoder audio apparatus comprises a receiver 201 which receives an encoded audio data signal that provides an encoded representation of an audio signal. The decoder audio apparatus may specifically receive the encoded audio data signal generated by the encoder audio apparatus of FIG. 1 and it will be described further with reference to this scenario. The decoder is arranged to seek to generate an output audio signal which is a (perceptual) reconstruction of the audio signal encoded by the encoder audio apparatus.

The received encoded audio data signal accordingly comprises the latent space feature set generated by the encoder audio apparatus as well as typically encoded audio data representing the second signal component/ the residual signal.

The decoder audio apparatus of FIG. 2 further comprises a signal decoder 203 which is arranged to receive the encoded audio data for the encoded audio data representing the second signal component/ the residual signal and to reconstruct this second signal component/residual signal by decoding the received encoded audio data. It will be appreciated that any suitable approach for encoding and decoding the second signal component/the residual signal may be used by the encoder and decoder apparatuses, and that the encoding and decoding process may in principle provide a transparent communication of the second signal component/residual signal (although some processing distortion/error/artefacts may of course occur).

The residual signal/ second signal component is in the described example a signal component resulting from an extraction of the first signal component from the audio signal.

In many embodiments, the encoded audio data signal may thus comprise encoded audio data representing a residual signal which is a signal resulting from (at the encoder) removing the sinusoids/harmonic grid from the audio signal. The decoder audio apparatus includes the signal decoder 203 arranged to generate/reconstruct a copy of the residual signal from the encoded audio data provided for the residual signal.

The receiver 201 is further coupled to a first trained artificial neural network 205 which is arranged to generate at least one and typically more frequency parameters that reflect frequency properties of the audio signal from the received latent space feature set.

The frequency parameters may specifically be pitch parameters that reflect/are indicative of pitch properties of the audio signal. In many embodiments, the first trained artificial neural network 205 is specifically arranged to generate at least one and typically more pitch parameters that reflect pitch properties of the audio signal from the received latent space feature set.

The first trained artificial neural network 205 comprises input nodes that receive data values of the latent space feature set and output nodes that represent one or more frequency/pitch parameters for an audio signal. The first trained artificial neural network 205 is accordingly trained to receive (a typically very low number of) latent space feature set values and to generate a (typically substantially) higher number of frequency/pitch parameters describing properties of sinusoids/harmonics. The first trained artificial neural network 205 accordingly has output nodes that provide frequency/pitch parameter values.

The first trained artificial neural network 205 is coupled to a pulse sequence generator 207 which is arranged to generate a pulse sequence with properties that are determined from (at least) the frequency/pitch parameters received from the first trained artificial neural network 205.

In particular, in many scenarios the frequency/pitch parameters may indicate a timing property of the pulses being generated, such as specifically a timing offset or a time/duration between pulses. The pulse sequence generator 207 may then proceed to generate a pulse sequence with the pulses having the properties given by the frequency/pitch parameters. The pulse sequence may accordingly be generated with timing properties that are dependent on the harmonic/sinusoidal properties of the encoded audio signal. For example, the frequency/pitch parameters may indicate a frequency of a tone/pitch/sinusoid of the audio signal, and the frequency and timing of the pulses may be adapted based on this frequency, e.g. to specifically occur at the same frequency.

The pulse sequence generator 207 is coupled to a shaping circuit 209 which is arranged to generate a first audio signal from the pulse sequence. The shaping circuit 209 applies a spectro-temporal shaping to the pulse sequence to generate the first audio signal where the spectro-temporal shaping is performed dependent on the received latent space feature set.

A spectro-temporal shape of a signal may typically include/represent the spectral and(/or) temporal envelopes of the downmix and generated signals. A spectro-temporal shape of a signal may be a spectro-temporal envelope of the signal. The latent space feature set may comprise information that reflect the spectro-temporal shape of the first signal component and specifically may (in addition to providing information on the pitch parameters) provide features that represent/characterize/are dependent on the spectro-temporal shape/envelope of the first signal component.

A spectro-temporal shape of a signal may typically include/represent the spectral and(/or) temporal envelopes of the signal. A spectro-temporal shape of a signal may be a spectro-temporal envelope of the signal.

The shaping circuit 209 is further coupled to an output circuit 211 which is arranged to generate an output audio signal from the first audio signal. In some cases, the output audio signal may indeed be generated directly as the first audio signal, or may e.g. be generated as a filtered or amplified/attenuated version of this. However, in many embodiments, the output circuit 211 is further coupled to the signal decoder 203 from which it receives the second signal component/residual audio signal. The output circuit 211 may in such embodiments typically generate the output audio signal by combining the first audio signal and the second signal component/residual audio signal, e.g. simply by adding them together (potentially after scaling).

The described approach may provide a highly advantageous operation in many embodiments and for many signals. It has been found to provide a substantially improved trade-off between data rate and audio quality on one hand and complexity and processing requirements on the other hand. The approach may provide a particular structure that allows and facilitates an efficient use of neural networks within the context of audio encoding and decoding. The approach may provide a hybrid approach that combines parametric analysis and representation of particular signal components with efficient encoding and data compression based on one or more dedicated trained neural networks. Similarly, the decoder can use a complementary hybrid approach of trained neural network decoding processing directed at specific operations and particular functions, such as in particular in determining frequency/pitch parameters (e.g. pitch trajectory) for a pulse sequence and/or the spectro-temporal shaping of this. This use of very dedicated trained artificial neural networks with more conventional type audio encoding/decoding processing has been found to allow a high audio quality for a very low data rate to be achieved for many signals. Furthermore, significantly, it may allow artificial neural networks to be trained for specific determinations and functions which may allow for a better and/or facilitated training.

Very significantly, the approach may provide a substantially overall complexity and processing resource reduction compared to more conventional encoding/decoding approaches based on neural networks. Typically, substantially smaller neural networks requiring substantially fewer operations and calculations are needed.

Indeed, whereas many suggested neural network based encoding/decoding approaches have promised unsurpassed bit-rate vs quality properties, audio codecs employing neural networks still find little practical use due to an associated excessive computational complexity required to decode the audio signal. These types of codecs typically require hardware acceleration (typically using Graphic Processing Units) to allow for real-time decoding.

However, the described approaches may provide for semi-parametric/hybrid audio encoder/decoder approaches which are specifically capable of encoding/decoding harmonically related content effectively, while still making use of representations that can be generated and processed by neural networks.

As a result of the hybrid semi-parametric analysis/synthesis approach, instead of a very large neural network, the encoding and decoding of the harmonic grids may be realized by a few much smaller neural networks. The smaller neural networks typically require much less parallelism than found in end-to-end networks. The approach may in many cases enable realtime applications even in devices with relatively low computational resource, such as e.g. in personal portable devices.

The frequency parameters may be any parameters indicative of a fundamental frequency/pitch/tone/harmonic/sinusoid of a signal component of the audio signal, and specifically may include a frequency/pitch/ frequency trajectory parameter indicative of a change with time of a frequency of a signal component. The frequency parameters may include a time domain and/or frequency envelope parameter which reflects the variations in the envelope of one or more sinusoidal components of the audio signal. The frequency parameters may typically be indicative of a property of one or more tones/sinusoidal components of the audio signal and specifically may be indicative of a property of a harmonic grid of tones in the audio signal.

In many embodiments, the frequency parameters are in many embodiments specifically pitch parameters indicative of a pitch property and the following description will focus on this. In the following specific references to pitch parameters and properties will accordingly be used but it will be appreciated that the described concepts as appropriate are more generally applicable to frequency parameters indicative of a frequency property of a sinusoid of the audio signal (including e.g. harmonic frequencies).

The pitch parameters may be any parameters indicative of a fundamental frequency/pitch of a signal component of the audio signal, and specifically may include a fundamental frequency/pitch trajectory parameter indicative of a change with time of a pitch of a signal component.

The pulse sequence generator 207 may generate the pulse sequence from such pitch parameters by a simple sum of sinusoids:

$$x[n] = \sum_{k=1}^{K} \sin\left(\varphi^k[n]\right)$$

$$\varphi^k[n] = \varphi^k[n-1] + \frac{2\pi k f_0[n]}{f_s}$$

The first equation describes the pulse sequence x[n] as a sum *of K* sinusoids, where the instantaneous phase of each sinusoid *k* is updated iteratively with the instantaneous pitch/fundamental frequency $f_0[n]$, for a sample rate $f_s$. As a result, a pulse sequence will emerge that is bandlimited to $K \cdot f_s$ that follows the pitch/fundamental frequency trajectory $f_0[n]$.

By ensuring that $K < \dfrac{f_s}{2 \cdot f_0[n]}$ for all samples n, no aliasing will occur. In "Alias-Free Digital Synthesis of Classic Analog Waveforms", Timothy S. Stilson and Julius Orion Smith, International Conference on Mathematics and Computing, 1996, a closed form expression of the sum of sinusoids is provided that does not require any summation.

Alternatively, a simpler pulse generation method may be created using the following algorithm.

$$\varphi[n] = mod\left(\varphi[n-1] + \frac{2\pi f_0[n]}{f_s}, 2\pi\right)$$

$$x[n] = \begin{cases} 1 & if & \varphi[n] < \varphi[n-1] \\ 0 & elsewhere & \end{cases}$$

In contrast to the sum of sinusoids, this algorithm does not create aliasing-free pulses.

The shaping circuit 209 may be arranged to apply a spectro-temporal shaping by applying gains/scalings/-weights/filtering in the time domain and/or the frequency domain. For example, in many embodiments, the shaping circuit 209 may include an adaptive/time-varying/programmable filter which receives the pulse sequence and which applies a suitable shaping filter with a suitable frequency response and impulse response to generate a suitably shaped signal from the pulse sequence. The coefficients and settings of the shaping filter may be set based on the parameter values and/or outputs generated by a second trained artificial neural network from the latent space feature set. In some cases, such a shaping filter may for example be implemented by first feeding a (typically fixed amplitude) pulse sequence to a frequency shaping filter to a to apply a spectral shaping followed by a time domain gain/amplitude scaling to apply a temporal shaping.

As an example, the shaping circuit 209 may be arranged to first convert the signal to the frequency domain, e.g. using a Short Time Fourier Transform (STFT). By appropriately scaling the resulting coefficients and converting the STFT representation back to the time domain, a frequency shaped signal is obtained. That signal could be shaped by multiplication with an appropriate time domain envelope.

In some embodiments, the shaping circuit 209 may be arranged to adapt the spectro-temporal shaping based on the latent space feature set by using deterministic algorithm to determine suitable shaping/processing parameters. For example, the shaping circuit 209 may comprise a synthesis filter to which the pulse sequence is fed, and which generates the first signal component by filtering the pulse sequence. In this case, each of the parameters/coefficients of the synthesis filter may be determined by applying a deterministic (typically fixed) function to the received latent space feature set values.

However, in many embodiments, the shaping circuit 209 comprises a trained artificial neural network, henceforth referred to as the second trained artificial neural network or the just the second neural network, which receives the latent space feature set, and which controls the shaping circuit 209 to adapt the spectro-temporal shaping dependent thereon. The second neural network may thus comprise a second trained artificial neural network having input nodes arranged to receive the latent space feature set with output nodes that control the spectro-temporal shaping.

For example, in some embodiments, the second trained artificial neural network may generate output values that are parameters for a synthesis filter to which the pulse sequence is fed. For example, the second trained artificial neural network may be trained to directly provide parameters/coefficients for a synthesis filter which performs spectro-temporal shaping by filtering the pulse sequence.

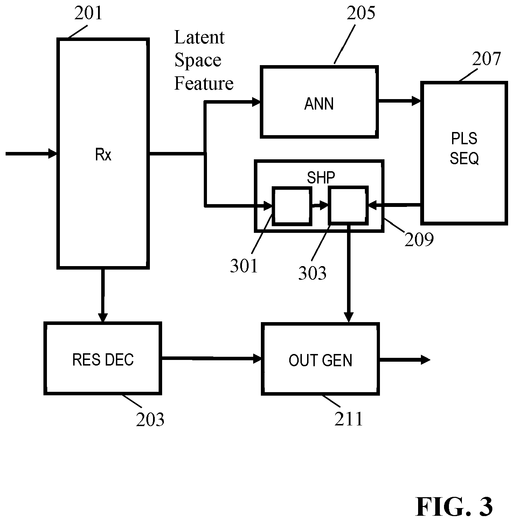

An example of such an approach is shown in FIG. 3. In the example, the shaping circuit 209 comprises a second trained artificial neural network 301 which is trained to output parameter values that adapt a synthesis filter 303. For example, the second trained artificial neural network 301 may directly output coefficient values for a FIR or IIR synthesis filter (or may e.g. provide frequency domain filter values).

Such an approach may provide a highly efficient approach while achieving high perceived audio quality for the generated output audio signal. In particular, it may allow for the second trained artificial neural network 301 to have relatively low complexity requiring a relatively low number of nodes and calculations. In particular, it has been found that the approach provides for a very targeted use of a trained artificial neural network to perform adaptive pulse shaping which results in high performance for very low complexity.

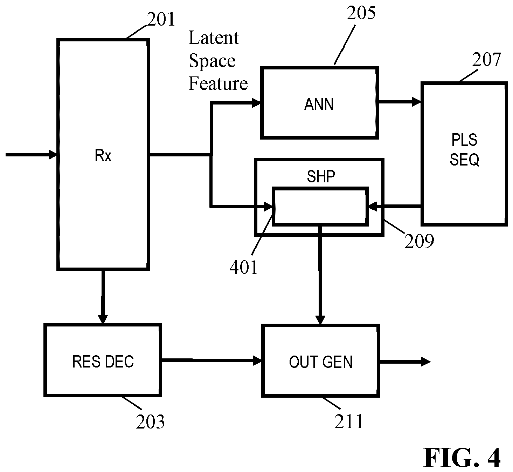

In some embodiments, the shaping circuit 209 may include a second trained artificial neural network 401 which directly receives the pulse sequence and the latent space feature set as inputs and which directly generates the first signal component, as in the example of FIG. 4. The second trained artificial neural network 401 may thus in such embodiments have input nodes that receive samples of the pulse sequence as well as the values of the latent space feature set and may further have output nodes that directly provides samples of the first signal component. The second trained artificial neural network 401 may receive the samples of the pulse sequence and may be conditioned based on the latent space feature set to generate a suitable first signal component. The second trained artificial neural network 401 may in this case be trained to directly generate the first audio signal.

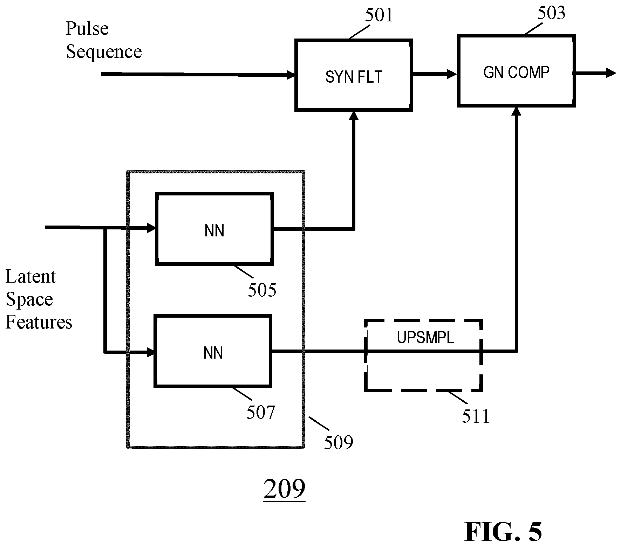

A particular example of a shaping circuit 209 is illustrated in FIG. 5. In the particular example, the spectro-temporal shaping is performed by a synthesis filter 501 followed by a time domain gain adjustment 503. In the example, the shaping circuit 209 further includes a pair of second trained artificial neural networks 505, 507 which receive the latent space feature set and which are trained to generate suitable parameters for adapting the synthesis filter 501 and the time domain gain adjustment 503, respectively. The two trained artificial neural networks will for brevity be referred to as respectively the filter neural network 505 and the gain neural network 507, and it will be appreciated that in many embodiments these neural networks can be implemented as a single combined trained artificial neural network 509.

The shaping circuit 209 may accordingly comprise a trained filter neural network 505 which receives the latent space feature set, and which is arranged to generate output values that are used to adapt the synthesis filter 501 such that this may filter the pulse sequence to generate a suitably spectrally shaped output. The filter neural network 505 may in many embodiments for example directly generate settings, such as specifically filter coefficients, that are applied to the synthesis filter 501. In other embodiments, the filter neural network 505 may be arranged to generate parameters that are then converted into suitable parameters/settings for the synthesis filter 501 using e.g. a deterministic formula or algorithm. For example, in some embodiments, such as specifically for many speech applications, the filter neural network 505 may be arranged to generate a vector of Line Spectral Frequencies which may provide a suitable characterization of elements of the (speech) signal. A conversion may then be applied to convert these into Linear Predictive Coding (LPC) parameters using well known conversion algorithms. The LPC parameters may then directly adapt the synthesis filter 501. This may for example allow a known LPC synthesis filters to be used in the described structure and may enable a practical and efficient use of neural networks to improve audio encoding and decoding.

In the example, the output of the synthesis filter 501 is fed to a time domain gain adjustment 503 which applies time domain gains to perform a time domain shaping. The shaping of the synthesis filter 501 may in many embodiments be predominantly (or exclusively) a spectral shaping whereas the time domain gain adjustment 503 may perform a temporal shaping. The cascade of the functions may accordingly efficiently interwork to generate a spectro-temporal shaping of the pulse sequence to provide an output signal that effectively reproduces sinusoidal/harmonic elements of the input audio signal that was encoded.

The gain neural network 507 may directly be arranged to generate a set of time domain gain parameters and the time domain gain adjustment 503 may include a scaler/multiplier/adjuster that applies a time domain shaping of the first audio signal by applying a scaling that is dependent on the generated time domain gain parameters.

Specifically, the gain neural network 507 may from the latent space feature set be trained to directly generate gain/scale values for the samples of the first audio signal and the time domain gain adjustment 503 may be arranged to multiply the signal generated by the synthesis filter 501 by the generated values. For example, the output from the synthesis filter 501 may be generated to have a suitable spectral shaping for a given amplitude and the time domain gain adjustment 503 may proceed to scale each sample of this signal to overlay a suitable temporal shaping to result in an output first audio signal that closely corresponds to the first signal component encoded by the encoder. The synthesis filter 501 may filter a fixed amplitude pulse sequence to result in a signal with an appropriate spectral envelope shape and the time domain gain adjustment 503 may adapt this signal to apply a suitable temporal envelope/ amplitude. The time domain gain adjustment 503 may accordingly apply the shaping reflecting the time domain envelope variations of the first signal component of the encoder audio apparatus.

In some cases, the gain neural network 507 may directly generate time domain gain values for each sample of the first audio signal. However, in many embodiments, a more efficient approach is achieved by having the gain neural network 507 generate gain values with a substantially lower temporal resolution. Such lower sample rate gain values may then be upsampled to a higher sample rate, including specifically to the sample rate of the first audio signal.

Such an upsampling may in many cases be achieved using a conventional upsampler. However, in many cases, the time domain gain adjustment 503 may include a gain upsampling trained artificial neural network 511 which is trained to generate higher sample rate time domain gain values from the gain values received from the gain neural network 507. The gain upsampling trained artificial neural network 511 accordingly has input nodes that receive the time domain gain parameters with a lower sample rate and output nodes that provide higher sample rate time domain gain values/scale factors. The gain values/scale factors are then directly applied to (typically multiplied by) the time domain sample values of the signal generated by the synthesis filter 501.

In the described approach, different trained artificial neural networks 505, 507 may be used to respectively determine the filter parameters and the time domain gain parameters and these different neural networks may be individually trained to provide suitable output parameters based on the latent space feature sets. However, in other embodiments, a single common neural network may be used to implement both the filter neural network 505 and the gain neural network 507. Thus, the filter neural network 505 and the gain neural network 507 may essentially be formed/implemented by the same trained artificial neural network having input values receiving the latent space feature set and output values providing both the filter parameters and the gain parameters. Thus, the filter neural network 505 and the gain neural network 507 may be part of a common trained artificial neural network.

In some embodiments, the first trained artificial neural network 205 may generate pitch parameters at a relatively low sample rate and the pulse sequence may include an upsampling function for increasing the sample rate for the pitch parameters and specifically it may include an upsample function that generates one or more pitch parameters at the sample rate of the pulse sequence. In many embodiments, a conventional upsampling approach may be used, such as for example by the use of interpolation upmixing filters.

However, in some embodiments, the pulse sequence generator 207 includes an upsampling neural network which is trained to generate higher rate upsampled pitch parameters. The pitch parameter upsampling neural network may accordingly have input nodes that receive one or more of the pitch parameter values and with output nodes that provide upsampled pitch frequency values for one or more of the pitch parameters. In particular, the upsampling neural network may generate higher sample rate values for a fundamental or harmonic pitch represented by the latent space feature set. The upsampling neural network may in particular generate such pitch values at the data rate of the pulse sequence or the first audio signal. This may allow a pulse sequence to be generated which may more accurately reflect and represent the harmonic properties of the encoded audio signal.

In many embodiments, an upsampling neural network may be employed that gradually upsamples the pitch parameters in different layers of the network. The upsampling neural network may be combined with the first trained artificial neural network 205 to implement a single network that produces a high-resolution pitch trajectory from a set of latent space features.

In many embodiments, the described trained artificial neural networks of the audio encoder or decoder may be implemented as individual and separately trained neural networks. Such specific and targeted neural networks may often be implemented with reduced complexity and size thereby reducing the computational resource usage and required hardware.

However, in some embodiments, some neural networks may be implemented by a single common trained artificial neural network. In particular, the first and second trained artificial neural networks of the decoder, i.e. the first trained artificial neural network 205 generating the pitch parameters and the trained artificial neural network of the shaping circuit 209 may be implemented as a single trained network. For example, a single trained artificial neural network may have input nodes that receive the latent space feature set and output nodes that provide the pitch parameter values, the synthesis filter parameters, and the time domain gain parameters.

Such common/combined neural networks may be trained to provide full sets of output parameters that result in the generated audio signals more closely resembling the original input audio signal that was decoded. As such, it may in many scenarios provide an improved audio decoding process with an increased audio quality of the reproduced signal. It may also in some cases provide facilitated implementation as a single larger combined network may sometimes be easier to implement using e.g. dedicated hardware with an optimized architecture for the required operations.

In many embodiments, the first trained artificial neural network 205 is implemented as a fully connected artificial neural network. It has been found that using a fully connected artificial neural network is particularly effective in recreating suitable parameters from the latent space feature set. It has been found that the additional connections that are present in fully connected networks allow an improved adaptation to cross feature value properties of the latent space feature set thereby allowing improved accuracy of the generated pitch parameters. Further, due to the efficient architecture and the approach of using neural networks for smaller and more specific operations, smaller neural networks with fewer nodes can often be used thereby making it more practical for the trained artificial neural network to be a fully connected network.

In many cases, such considerations may also apply to combined/common neural networks that implement more than one of the described neural networks. For example, in many embodiments, a single fully connected neural network may be used to generate both pitch parameters, synthesis filter parameters, and time domain gain parameters from the received latent space feature set.

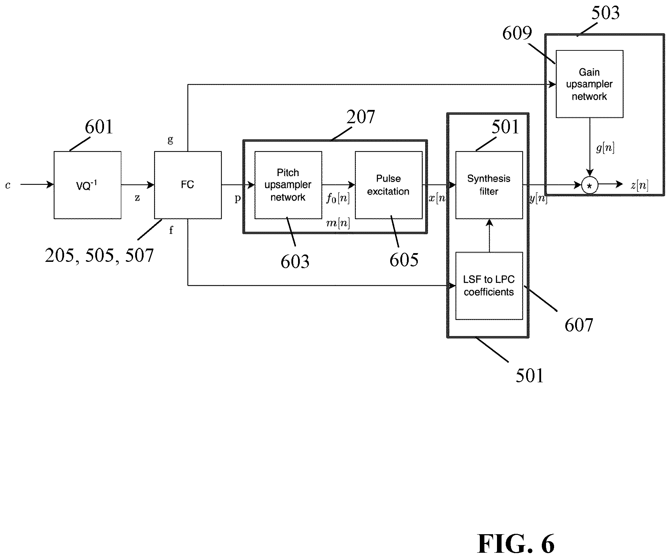

Indeed, FIG. 6 illustrates an example of such an approach of generating the first audio signal based on the received latent space feature sets. The exemplary harmonic grid decoder of FIG. 6 includes a decoder which decodes the received data into the values of the latent space feature set. In the specific example, a received discrete code c is decoded using a vector dequantizer $VQ^{-1}$ 601 into a latent space vector z. It will be appreciated that any suitable encoding/decoding of the latent space feature set values may be used including in particular a Vector Quantizer/ Dequantizer as known from VQ-VAE encoding approach as described in Aaron van den Oord and Oriol Vinyals and Koray Kavukcuoglu, "Neural Discrete Representation Learning", 2018, arXiv 1711.00937.

Thus, in some embodiments, the encoding of the latent space feature set values may be an adaptive approach where suitable codes are determined dynamically and dependent on the signal properties. Indeed, in some embodiments, the encoder audio apparatus may comprise a trained artificial neural network which is trained to generate suitable encoding values for encoding the values of the latent space feature set output by the encoding trained artificial neural network 111. Such an approach may lead to a highly efficient encoding of the latent space feature sets and may result in a very compact representation and a low data rate for the encoded audio data signal. Indeed, in some cases, the latent space feature sets, and thus the input audio signals, may for each time segment of the order 50-300msec be represented by as little as a few tens of, or indeed in some cases less than ten, parameter values.

The encoding of the latent space feature set (or at least one or more of the feature values) may be by a reference to an entry of a codebook which comprises entries for different values of the latent space feature set. Thus, a codebook may be used by the encoder and decoder audio apparatus with the encoded audio data signal including one or more indications of an index to an entry in the codebook. Each of the entries in the codebook accordingly includes one or more values for one or more of the features of the respective latent space feature set. The encoder audio apparatus may thus determine indices to entries in the codebook that best represent the determined values of the latent space feature set. The decoder audio apparatus may have the same codebook and thus can determine the values of the latent space feature set by extracting the values stored for the entries indicated in the encoded audio data signal. Such an approach may provide efficient communication and reduced data rate, especially when an efficient codebook is available.

In some embodiments, the codebook itself may be dynamically determined and adapted to provide a more efficient representation. Indeed, in some embodiments, the encoder audio apparatus may include a trained neural network which is arranged to determine codebook entries based on the (previously) determined latent space feature set. Similarly, the receiver 201 of the decoder audio apparatus may comprise a corresponding trained artificial neural network which also determines entries for the codebook based on the (previously) received latent space feature set values. Accordingly, by using the same approach and correspondingly trained neural networks at the encoder audio apparatus and the decoder audio apparatus, the same codebook may be dynamically generated and used at both ends.

The training of the codebook artificial neural networks may be a joint training together with the training of the other encoder and decoder neural networks. As another example, the other artificial neural networks may first be trained with the latent space feature set being directly exchanged from the encoder audio apparatus to the decoder audio apparatus without any encoding or compression. After this training, the system may proceed to train the codebook neural network without adapting the other neural networks.

In many embodiments, the encoder audio apparatus may implement some functions using elements of a VQ-VAE approach. In the following, a more detailed description of some possible specific implementations of the encoder and decoder audio apparatuses using such considerations will be described. In the examples, the latent space feature sets will also be encoded using dynamically determined codebooks and cost functions that are also particularly suitable for a joint training with the corresponding codebook artificial neural networks will be described. It will be appreciated that for examples where no such codebook neural networks are included, the corresponding contributions to the cost values may be disregarded.

The latent space vector is after decoding processed by the fully connected neural network FC 205, 505, 507 into a vector of pitch parameters p, a vector of spectral parameters f, and a vector of gain parameters g.. The fully connected network thus implements the first trained artificial neural network 205, the synthesis neural network 505, and the gain neural network 507.

The pulse sequence generator 207 includes a pitch upsampler network 603 which upsamples the pitch parameters generated by the fully connected neural network FC 205, 505, 507. The pitch upsampler network 603 may often be realized as a convolutional neural network and may process the pitch parameters p into two time sequences $f_0[n]$ and m[n], representing typically the instantaneous fundamental frequency and the instantaneous number of harmonics respectively.

These time sequences are fed to a traditional pulse synthesis module 605, such as a BandLimited Impulse Train (BLIT) as described in Tim Stilson and Julius Smith, "Alias-free digital synthesis of classic analog waveforms," in Proc. of the Int. Computer Music Conference (ICMC), 1996. The pulse synthesis module 607 then generates a suitable pulse sequence x[n].

In the example, the fully connected neural network FC 205, 505, 507 generates spectral parameters f that consist of a vector of Line Spectral Frequencies which represent the spectral envelope. The synthesis filter 501 may accordingly include a conversion module 607 which is arranged to convert the Line Spectral Frequencies to a set of LPC coefficients. Based on these LPC coefficients, the pulse sequence x[n] is filtered into sequence y[n]. This signal is finally amplified/scaled by the time series of gain values g[n] that is the result of a gain upsampler network 609 upsampling the gain values generated by the fully connected neural network FC 205, 505, 507.

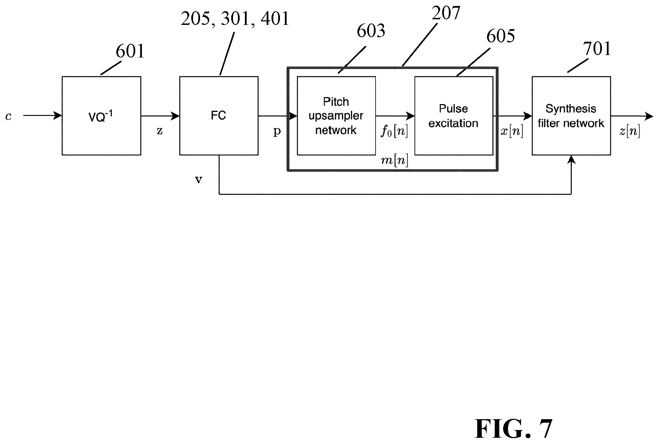

FIG. 7 illustrates a corresponding example where the shaping circuit 209 is implemented by a trained artificial neural network which receives the pulse sequence x[n] and parameters v that condition the trained artificial neural network to provide a suitable spectro-temporal shaping.

In the example, the fully connected network FC 205, 301, 401 provides a vector of pitch parameters p and a vector of spectro-temporal parameters v. The pulse sequence is in the example generated as in the example of FIG. 6, but the shaping circuit is implemented using a shaping trained artificial neural network 701 which in the case is trained to generate the spectro-temporally shaped audio signal z[n] from the pulse sequence x[n] while being conditioned on the parameters v.

In the example, the fully connected network FC 205, 301, 401 generates a set of spectro-temporal parameters v which are then used to condition the shaping trained artificial neural network 701. Thus, in the example, the shaping can be considered to be performed by a trained artificial neural network which is split across two sub-neural networks, namely the fully connected network FC 205, 301, 401 and the shaping trained artificial neural network 701. However, it will be appreciated that in other embodiments, the shaping trained artificial neural network 701 may directly receive/be conditioned on the latent space feature set itself (corresponding to the example of FIG. 4).

In the described approaches, a semi-parametric synthesis may be employed which enables that instead of a very large neural network, the decoding of in particular harmonic grids may be realized by a few much smaller neural networks, including potentially lower complexity pitch upsampler and gain upsampler networks together with efficient and more traditional signal processing algorithms. The smaller neural networks typically require much less parallelism than found in end-to-end networks. Particularly the primary purpose of the upsampler networks is to realize low-pass trajectories from a small set of features.

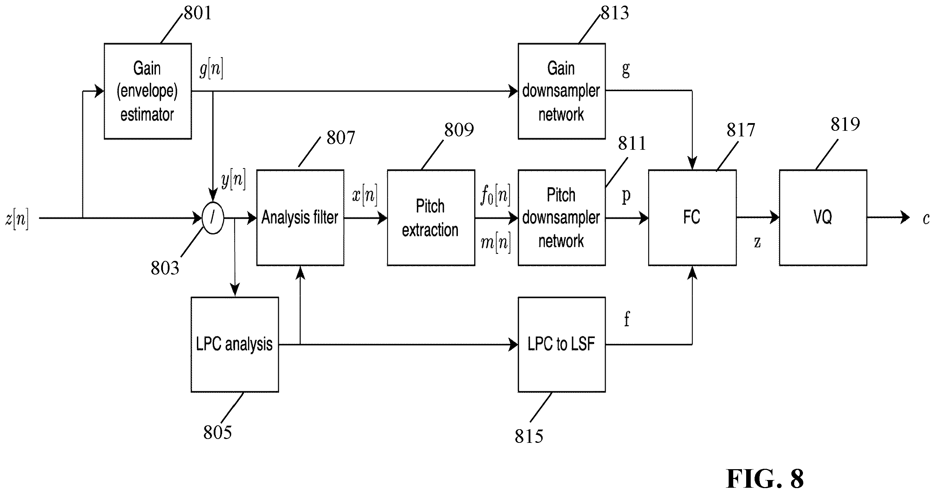

FIG. 8 illustrates an example of an encoder audio apparatus that may complement the decoder audio apparatuses of FIG. 6 and 7.

In the encoder, an input signal z[n], is fed to a gain estimator 801 which generates/estimates a gain signal (specifically an envelope signal) g[n]. That envelope is in a compensator 803 basically divided out resulting in a signal y[n] which is substantially flat (constant amplitude) over time.

In a speech application, such as a communication application, the signal z[n] may typically have been processed by a speech enhancement system which may include processing such as beamforming (for improved clarity and denoising), acoustic echo cancellation to remove feedback, noise suppression and dereverberation etc.

An LPC analysis circuit 805 may perform a traditional LPC (Linear Predictive Coding) analysis (e.g. using autocorrelation + Levinson algorithms) resulting in LPC coefficients that are then directly used in an analysis filter 807 to create a whitened signal x[n].

From the whitened signal x[n], a pitch extractor 809 estimates the pitch f0[n] (and nr of harmonics m[n]) present in the gain compensated and whitened audio signal.

The pitch f0[n] and harmonics m[n] signals are then fed to a pitch downsampler trained artificial neural network 811 which is trained to generate a set of pitch parameters p representing/describing the pitch f0[n] and harmonics m[n] signals.

Further, the gain signal g[n] is processed by a gain downsampling trained artificial neural network 813 that is trained to generate a vector of gain parameters g.

Also, the LPC parameters are by a converter 815 converted to (traditional) Line Spectral Frequency (LSF) parameters f.

The generated g, p and f parameters are then fed to an encoder trained artificial neural network 817 which is trained to generate a latent space feature set representing the parameters with the encoder trained artificial neural network 817 receiving the g, p and f parameters as inputs.

The resulting latent space feature set is then fed to an encoder module 819, which in the specific example is a Vector Quantizer VQ as known from VQ-VAE approaches. The encoder module 819 is arranged to generate data values representing the latent space feature set and the resulting data values may then be transmitted to a remote decoder in a suitable data signal, which typically may also include a residual signal representing the non sinusoidal/harmonic parts of the audio signal being encoded.

In some embodiments, an audio decoder may accordingly be provided which is particularly suited for, and capable of, decoding harmonically related content (specifically harmonic grids) and residual components (e.g. transients, noise, individual sinusoids) where the harmonic grid is represented by a latent space representation of a set of parameters. The latent space representation may specifically represent/encode a pitch trajectory which may be decoded by the decoder using a trained artificial neural network. The decoder may synthesize a pulse train/sequence using the pitch trajectory parameters. Further, from the latent space representation, a spectro-temporal representation may be decoded using a trained artificial neural network and the synthesized pulse train is shaped according to the spectro-temporal representation. The resulting signal may then be combined with decoded residual signal components to generate the audio output signal.

In some embodiments, a pulse train/sequence as described in the previous paragraph may be processed using a trained artificial neural network that also receives the latent space representation and which is trained to generate an output signal that corresponds to a spectro-temporal shaping of the pulse train according to the spectro-temporal representation. The resulting signal may then be combined with decoded residual signal components to generate the audio output signal.

Different approaches may in different embodiments be used to train the different artificial neural networks and in particular joint or individual training of different artificial neural networks may be applied depending on the preferences or requirements of the individual embodiment and implementation.

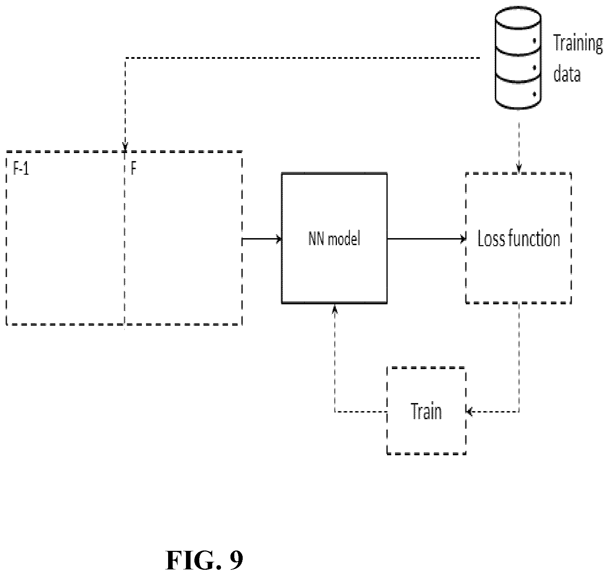

Artificial neural networks are adapted to specific purposes by a training process which is used to adapt/ tune/ modify the weights and other parameters (e.g. bias) of the artificial neural network. It will be appreciated that many different training processes and algorithms are known for training artificial neural networks. A training setup that may be used for the described artificial neural networks is illustrated in FIG. 9.

Typically, training is based on large training sets where a large number of examples of input data are provided to the network. Further, the output of the artificial neural network is typically (directly or indirectly) compared to an expected or ideal result. A cost function may be generated to reflect the desired outcome of the training process. In a typical scenario known as supervised learning, the cost (or loss) function often represents the distance between the prediction and the ground truth for a particular input data. Based on the cost function, the weights may be changed and by reiterating the process for the modified weights, the artificial neural network may be adapted towards a state for which the cost function is minimized.

Different approaches may be used to train the artificial neural networks of the described encoder and decoder apparatuses. In particular an overall (end-to-end) training may seek to result in the output of the encoder decoder system/processes that most closely has relevant perceptual properties that correspond to the input audio signal. The cost function may include a contribution from a direct comparison/correlation between the input signal and the output audio signal (e.g. comparison of waveform) and/or may include a contribution from a perceptual comparison/correlation between the input signal and the output audio signal, such as e.g. by comparing a difference between perceptual properties of the input audio signal and the audio signal. Specifically, a contribution to the cost function may come from a comparison of the spectro-temporal shape/envelope of the input audio signal and the synthesized output audio signal.

Thus, the trained artificial neural networks may be trained to provide an output audio signal that most effectively result in accurate reconstruction of the audio signal. In such a case, a cost function including a contribution based on the difference between a generated output audio signal and an original training input audio signal may be used. In other cases, more specific training of an artificial neural network may be used. For example, the training of one or more of the trained artificial neural networks may be based on a cost function that reflects a difference between corresponding properties of the generated output audio signal and the input audio signal. Specifically, a cost function may be used which has increasing cost values for an increasing statistical/spectro-temporal difference between the input audio signal and the output audio signal generated by the decoder/synthesizer audio apparatus.

Specifically, the cost function may determine a frequency distribution (an amplitude distribution) for the input audio signal and for the generated output audio signal in each time segment, and then determine a contribution to the cost function dependent on the difference between these, and typically as an increasing value for increasing difference. The training process may e.g. perform a transformation of the generated signal into frequency bins (e.g. using an FFT) and compare this to corresponding frequency bin values determined for the training downmix audio signal. Further, in many embodiments, the cost function may additionally or alternatively include a contribution which is dependent on the time domain waveform correlation between the generated output audio signal and the input audio signal, and specifically an increasing cost value may be determined for an increasing correlation.

In more detail, during a training step an artificial neural network (or a set of such networks) may have two different flows of information from input to output (forward pass) and from output to input (backward pass). In the forward pass, the data is processed by the artificial neural network(s) as described above while in the backward pass the weights are updated to minimize the cost function. Typically, such a backward propagation follows the gradient direction of the cost function landscape. In other words, by comparing the predicted output with the ground truth for a batch of data input, one can estimate the direction in which the cost function is minimized and propagate backward, by updating the weights accordingly. Other approaches known for training artificial neural networks include for example Levenberg-Marquardt algorithm, the conjugate gradient method, and the Newton method etc.

In the present case, training may specifically include a training set comprising a potentially large number of audio signals. The training sets may include audio signals representing a number of different audio sources including e.g. recording of videos, movies, telecommunications, etc.

In addition, the training set may for each training audio signal include training reference data which represents the output of the artificial neural network(s) that is desired to be generated for the specific training audio signal. In some cases, the training audio signal may itself also be training reference data (specifically if end to end signal similarity is part of the cost function). In some embodiments training reference data may include desired properties to be generated by the artificial neural network(s) for the training audio signal, such as spectro-temporal shape properties. In some cases, some or all of the training reference data may be generated dynamically from the training audio signal and in other cases it may e.g. be provided with the training audio signal (e.g. in cases where a manual or semi-manual process has been used to generate the training reference data).

In some embodiments, training data may be audio signals in time segments corresponding to the processing time intervals of the trained artificial neural network(s) being trained, e.g. the number of samples in a training multichannel audio signal may correspond to a number of samples corresponding to the input nodes of the artificial neural network(s) being trained. Each training example may thus correspond to one operation of the artificial neural network(s) being trained. Usually, however, a batch of training samples is considered for each step to speed up and smoothen the training process. Furthermore, many upgrades to gradient descent are possible also to speed up convergence or avoid local minima in the cost function landscape.

For each training audio signal, the artificial neural network(s) being trained may perform the process to generate output data. A cost function may be evaluated to generate a cost value. Typically, a comparison between the generated output data and training reference data may be performed to determine the cost value.

Based on the cost value, the weights of the artificial neural network(s) may be updated. For example, a back-propagation approach may be used. In particular, the weights of one or all of the artificial neural networks may be updated based on the cost value. For example, given the derivative (representing the slope) of the weights with respect to the cost function the weights values are modified to go in the direction of the slope. For a simple/minima account one can refer to the training of the perceptron (single neuron) in case of backward pass of a single data input.

The process may be iterated until the artificial neural networks are considered to be trained. For example, training may be performed for a predetermined number of iterations. As another example, training may be continued until the weights change be less than a predetermined amount. Also very common, a validation stop is implemented where the network is tested again a validation metric and stopped when reaching the expected outcome.

In some cases, the training may be performed individually for each artificial neural network and in other cases the training may be joint for two or more artificial neural networks.

In many embodiments, the training of each artificial neural network may be based on an end to end loss function that is based on comparing training input audio signals to the resulting decoded output audio signal resulting from a decoding and encoding process. In some embodiments, such end to end training may jointly train and update all artificial neural networks involved in the process. In other embodiments, only one or a subset of artificial neural networks may be modified/adapted at a time with the other artificial neural networks involved in the process maintained fixed while the individual artificial neural network is trained.

An end-to-end approach may also be particularly advantageous in situations where e.g. the VQ (or similar) compression of data is also adapted jointly with the neural network blocks based on the back-propagated loss between the input and decoded output(s), resulting in better decoding performance.

In other approaches, intermediate data may be used to determine a loss function. For example, the in many embodiments, the parameters input to the encoder trained artificial neural network 111 may be compared to the output values of the first trained artificial neural network 205 to generate a cost function used to train the encoder trained artificial neural network 111 and/or the first trained artificial neural network 205.

In some embodiments, the encoder trained artificial neural network 111 and the first trained artificial neural network 205 may for example first be trained using a cost function based on the distance of individual signals/parameters between encoder and decoder followed by a training based on a cost function dependent on an end-to-end waveform distance.

In some embodiments, the encoder trained artificial neural network 111 may be trained separately in that a training process is performed in which only parameters of the encoder trained artificial neural network 111 are adapted and modified. As previously mentioned, the training may be such that the encoder trained artificial neural network 111 generates a latent space feature set which represents the pitch parameters of sinusoid components of the audio signal. Based on the generated latent space feature set for a given training audio signal, a reproduction of the training audio signal may be generated. A cost value may then be determined using a cost function which evaluates the difference between the training audio signal and the reproduced audio signal.

The generation of the reproduced audio signal may specifically be by a trained artificial neural network, such as specifically by the synthesizer neural network of the decoder after this has been trained appropriately, e.g. during a manufacturing or design phase.

A similar approach may be applied to train the other neural network of the decoder. Specifically, after training of the encoder trained artificial neural network 111, a training audio signal may be provided to the encoder with the resulting latent space feature set then being provided to the decoder and the waveform of the resulting reproduced audio signal being compared to the waveform of the training audio signal to generate a cost value. A combined cost value may be determined for a large training set and used to update the parameters of the first synthesizer neural network.

In many cases, individual cost functions may be used for individual training networks. For example, the artificial neural network(s) of the shaping circuit 209 may be based on a cost function that specifically compares a spectral or temporal envelope of the shaped signal to corresponding properties of the sinusoids at the audio apparatus encoder. For example, cost values may be determined dependent on the difference between Mel spectrograms determined for the signals. In some cases, different cost functions may be used for different artificial neural networks of the shaping circuit 209. For example, for a time domain upsampler artificial neural network, the cost function may only consider time domain envelope distances whereas for a synthesis filter artificial neural network, the cost function may only consider frequence domain envelope distances.

In some embodiments, combinations of joint and individual training may be used. For example, initially a joint training of all artificial neural networks may be performed (e.g. for each path (i.e. individually for the deterministic and non-deterministic paths) or for the total end to end path). Following this initial joint training, each of the individual neural networks may be trained individually while keeping all other artificial neural networks fixed. This process may be repeated a number of times. Such a problem may provide a bootstrap approach addressing the issue of individual training of one artificial neural network in some training setups requiring that other artificial neural networks involved in the process are already trained.

In many cases the opposite approach to training multiple artificial neural networks may also prove useful. For example, each individual artificial neural network may first be trained based on suitable training data for the specific operations and the resulting trained artificial neural networks may then be further jointly trained using an end-to-end approach.

An example of jointly training the encoder 811, 813, 817 and decoder 205, 505, 507, 609, 603 neural networks in FIG.6 and FIG.8 is realized as following.

For each frame of length N, the encoder gain estimator 801 generates a gain envelope $g[n]$. The gain envelope $g[n]$ is fed to a first neural network 813 that reduces the amount of features to a number of G gain parameters g, e.g. using a Fully Connected (FC) network:

$$\mathrm{g} = \mathscr{F}_{gain} \left\{ \begin{array}{c} \vdots \\ g[n] \\ \vdots \end{array} \right\}$$

Similarly, the pitch parameters produced by pitch extraction *809 $f_0$*[n] and *m[n]* are converted to a number of P pitch parameters p:

$$\mathrm{p} = \mathscr{F}_{pitch} \left\{ \begin{array}{cc} \vdots & \vdots \\ f_0[n] & m[n] \\ \vdots & \vdots \end{array} \right\}$$

The final set of features are the number of F spectral envelope features f, created by the LPC to LSF conversion 815. The concatenated features g, p and f, are input to the neural network 817 producing Z latent space parameters z:

$$z = \mathcal{F}_{feature}\begin{Bmatrix} g \\ p \\ f \end{Bmatrix} = \mathcal{F}_{feature}\begin{Bmatrix} \mathcal{F}_{gain}\begin{Bmatrix} \vdots \\ g[n] \\ \vdots \end{Bmatrix} \\ \mathcal{F}_{pitch}\begin{Bmatrix} \vdots & \vdots \\ f_0[n] & m[n] \\ \vdots & \vdots \end{Bmatrix} \\ f \end{Bmatrix}$$

The number of latent space parameters Z is typically substantially smaller than the sum of G, P and F (Z < G+P+F) parameters, where in turn the number of G and P parameters are smaller than the frame length N.

At the encoder, the latent space feature vector is quantized by a vector quantizer 819 resulting in a codebook index c. At the decoder side the codebook index c is decoded by dequantizer 601, resulting in an approximate latent feature vector z' at the decoder side. At the decoder side a first neural network converts the latent space feature vector z to a concatenation of the approximate g', p' and f feature vectors:

$$\begin{bmatrix} g' \\ p' \\ f' \end{bmatrix} = \mathcal{F}'_{feature}\{z\}$$

The feature vectors g', and p' are converted to the approximate g'[n], $f_0$[n] and m'[n] vectors using the neural networks 609 and 603 respectively:

$$\begin{bmatrix} \vdots \\ g'[n] \\ \vdots \end{bmatrix} = \mathcal{F}'_{gain}\{g'\}$$

$$\begin{bmatrix} \vdots & \vdots \\ f'_0[n] & m'[n] \\ \vdots & \vdots \end{bmatrix} = \mathcal{F}_{pitch}\{p'\}$$

For training, a loss function can be defined as following, that includes the training of the codebook of the vector quantizer:

$$L = L_{f,signal} + \alpha \cdot L_{f,feature} + \beta \cdot L_{codebook} + \gamma \cdot L_{commitment}$$

where $L_{f,signal}$ represents the reconstruction loss of the features at the signal sampling rate g[n], $f_0$[n] and m[n], $L_{f,feature}$ represents the reconstruction loss of the features g, p and f, $L_{codebook}$ represents the loss related to the quantization of the latent space vector z and the commitment term $L_{commitment}$ aims at moving the latent space vector z closer to the quantization codebook. The scalar values $\alpha$, $\beta$ and $\gamma$ are used to balance the importance of the individual loss terms.

The reconstruction losses are typically defined as the L1 or L2 norms of the errors, e.g. ||g [n]-g'[n] l l i. The codebook loss is typically defined as:

$$L_{codebook} = \|\text{sg}[z_e(x)] - e\|_2^2$$

The sg[.] operator is the stop gradient operator, e is the codebook vector and $z_e(x)$ the encoder latent space vector given the input features x. The result of this loss term is that the codebook vectors will move towards the encoder latent space vector.

The commitment loss is typically defined as:

$$L_{commitment} = \|z_e(x) - \text{sg}[e]\|_2^2$$

The result of this loss term is that the encoder latent space vector will move towards the codebook vector.

In case the decoder corresponds to FIG.7, a similar approach may be applied, where the gain parameters g and the frequency parameters f are replaced.

It will be appreciated that many different structures and implementations of artificial neural networks are known and that any suitable approach and structure may be used for each of the described artificial neural networks. In some embodiments, the different artificial neural networks may be the same type and structure whereas in other embodiments different types and structures may be used for different artificial neural networks.

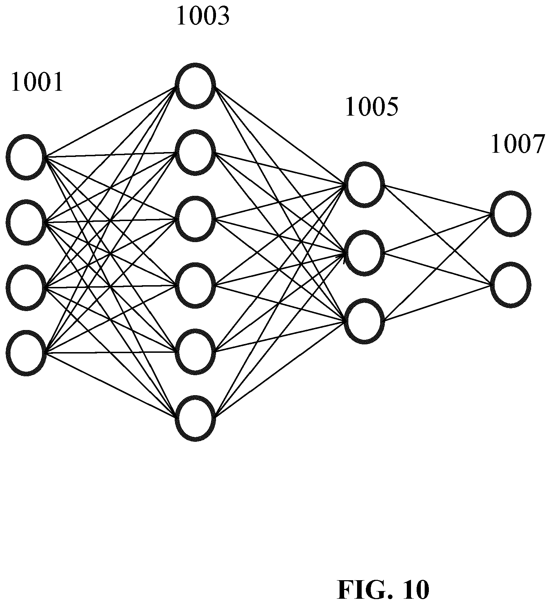

An artificial neural network as used in any of the described functions may be a network of nodes arranged in layers and with each node holding a node value. FIG. 10 illustrates an example of a section of an artificial neural network.

The node value for a given node may be calculated to include contributions from some or often all nodes of a previous layer of the artificial neural network. Specifically, the node value for a node may be calculated as a weighted summation of the node values of all the nodes output of the previous layer. Typically, a bias may be added and the result may be subjected to an activation function. The activation function provides an essential part of each neuron by typically providing a non-linearity. Such non-linearities and activation functions provides a significant effect in the learning and adaptation process of the artificial neural network. Thus, the node value is generated as a function of the node values of the previous layer.

The artificial neural network may specifically comprise an input layer 1001 comprising a plurality of nodes receiving the input data values for the artificial neural network. Thus, the node values for nodes of the input layer may typically directly be the input data values to the artificial neural network and thus may not be calculated from other node values.

The artificial neural network may further comprise none, one, or more hidden layers 1003, 1005 or processing layers. For each of such layers, the node values are typically generated as a function of the node values of the nodes of the previous layer, and specifically a weighted combination and added bias followed by a nonlinear activation function (such as a sigmoid, ReLU, or Tanh function may be applied).

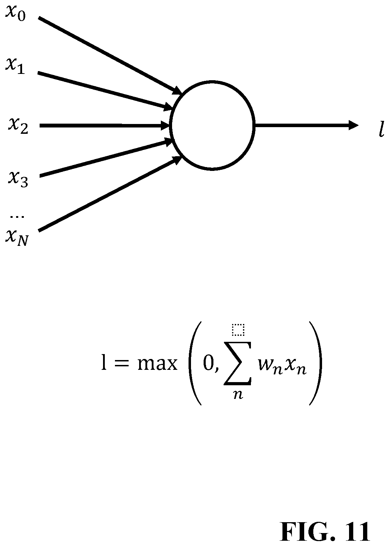

Specifically, as shown in FIG. 11, each node, which may also be referred to as a neuron, may receive input values (from nodes of a previous layer) and therefrom calculate a node value as a function of these values. Often, this includes first generating a value as a linear combination of the input values with each of these weighted by a weight:

$$k = \sum_{n} w_n x_n$$

where w refers to weights, x refers to the nodes of the previous layer and n is an index referring to the different nodes of the previous layer.

An activation function may then be applied to the resulting combination. For example, the node value 1 may be determined as:

$$l = f(k)$$

where the function may for example be a Rectified Linear Unit (as described in Xavier Glorot, Antoine Bordes, Yoshua Bengio Proceedings of the Fourteenth International Conference on Artificial Intelligence and Statistics, PMLR 15:315-323, 2011) function:

$$f(k) = ReLU(k) = \max(0, k)$$

Other often used functions include a sigmoid function or a Tanh function. In many embodiments, the node output or value may be calculated using a plurality of functions. For example, both a ReLU and Sigmoid function may be combined using an activation function such as:

$$f(k) = ReLU(k) + \sigma(k)$$

Such operations may be performed by each node of the artificial neural network (except for typically the input nodes).

The artificial neural network further comprises an output layer 1007 which provides the output from the artificial neural network, i.e. the output data of the artificial neural network is the node values of the output layer. As for the hidden/ processing layers, the output node values are generated by a function of the node values of the previous layer. However, in contrast to the hidden/ processing layers where the node values are typically not accessible or used further, the node values of the output layer are accessible and provide the result of the operation of the artificial neural network.

A number of different networks structures and toolboxes for artificial neural networks have been developed and in many embodiments the artificial neural network may be based on adapting and customizing such a network. An example of a network architecture that may be suitable for the applications mentioned above is WaveNet by van den Oord et al which is described in Oord, Aaron van den, Sander Dieleman, Heiga Zen, Karen Simonyan, Oriol Vinyals, Alex Graves, Nal Kalchbrenner, Andrew Senior, and Koray Kavukcuoglu. "Wavenet: A generative model for raw audio." arXiv preprint arXiv: 1609.03499 (2016).

WaveNet is an architecture used for the synthesis of time domain signals using dilated causal convolution, and has been successfully applied to audio signals. For WaveNet the following activation function is commonly used:

$$\mathbf{z} = \tanh\left(W_{f,k} * \mathbf{x}\right) \odot \sigma\left(W_{g,k} * \mathbf{x}\right),$$

where * denotes a convolution operator, $\odot$ denotes an element-wise multiplication operator, $\sigma(\cdot)$ is a sigmoid function, k is the layer index, f and g denote filter and gate, respectively, and W represents the weights of the learned artificial neural network. The filter product of the equation may typically provide a filtering effect with the gating product providing a weighting of the result which may in many cases effectively allow the contribution of the node to be reduced to substantially zero (i.e. it may allow or "cutoff" the node providing a contribution to other nodes thereby providing a "gate" function). In different circumstances, the gate function may result in the output of that node being negligible, whereas in other cases it would contribute substantially to the output. Such a function may substantially assist in allowing the artificial neural network to effectively learn and be trained.

An artificial neural network may in some cases further be arranged to include additional contributions that allow the artificial neural network to be dynamically adapted or customized for a specific desired property or characteristics of the generated output. For example, a set of values may be provided to adapt the artificial neural network. These values may be included by providing a contribution to some nodes of the artificial neural network. These nodes may be specifically input nodes but may typically be nodes of a hidden or processing layer. Such adaptation values may for example be weighted and added as a contribution to the weighted summation/ correlation value for a given node. For example, for WaveNet such adaptation values may be included in the activation function. For example, the output of the activation function may be given as:

$$\mathbf{z} = \tanh\left(W_{f,k} * \mathbf{x} + V_{f,k} * \mathbf{y}\right) \odot \sigma\left(W_{g,k} * \mathbf{x} + V_{g,k} * \mathbf{y}\right)$$

where y is a vector representing the adaptation values and V represents suitable weights for these values.

The above description relates to an artificial neural network approach that may be suitable for many embodiments and implementations. However, it will be appreciated that many other types and structures of artificial neural network may be used. Indeed, many different approaches to artificial neural networks have been, and are being, developed including artificial neural networks using complex structures and processes that differ from the ones described above. The approach is not limited to any specific artificial neural network approach and any suitable approach may be used without detracting from the invention.

In many embodiments, the artificial neural network may advantageously be a generative model such as a diffusion model artificial neural network. This may provide a particularly efficient and high quality generation of an auxiliary signal. In particular, generative models may include generative adversarial networks, variational autoencoders, and diffusion models among others. The Inventors have realized that a diffusion model approach provides a particular efficient operation and addresses many issues of many conventional approaches and indeed provides particularly advantageous operation over other (more common) artificial neural network approaches and structures.

In some embodiments, the artificial neural networks may specifically be implemented using Convolutional Artificial Neural Networks (CNNs) but it will be appreciated that many other types and architectures of neural networks may be used.

The audio apparatus(s) may specifically be implemented in one or more suitably programmed processors. In particular, the artificial neural networks may be implemented in one more such suitably programmed processors. The different functional blocks, and in particular the artificial neural network, may be implemented in separate processors and/or may e.g. be implemented in the same processor. An example of a suitable processor is provided in the following.

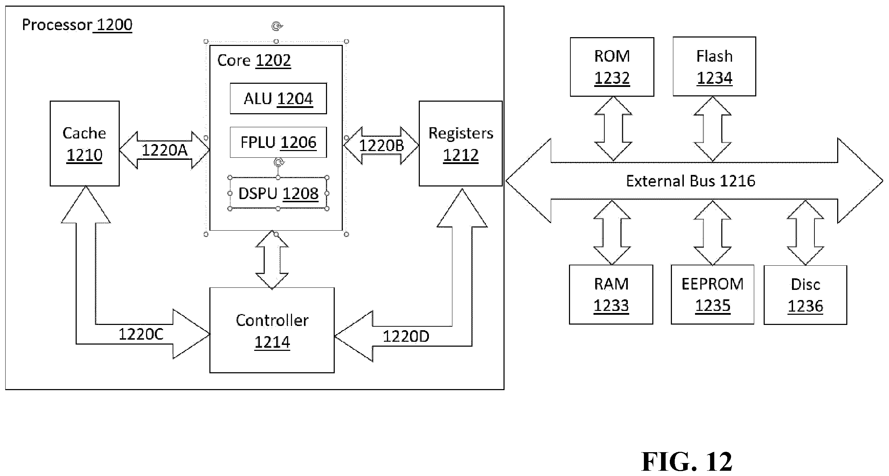

FIG. 12 is a block diagram illustrating an example processor 1200 according to embodiments of the disclosure. Processor 1200 may be used to implement one or more processors implementing an apparatus as previously described or elements thereof (including in particular one more artificial neural network). Processor 1200 may be any suitable processor type including, but not limited to, a microprocessor, a microcontroller, a Digital Signal Processor (DSP), a Field ProGrammable Array (FPGA) where the FPGA has been programmed to form a processor, a Graphical Processing Unit (GPU), an Application Specific Integrated Circuit (ASIC) where the ASIC has been designed to form a processor, or a combination thereof.

The processor 1200 may include one or more cores 1202. The core 1202 may include one or more Arithmetic Logic Units (ALU) 1204. In some embodiments, the core 1202 may include a Floating Point Logic Unit (FPLU) 1206 and/or a Digital Signal Processing Unit (DSPU) 1208 in addition to or instead of the ALU 1204.

The processor 1200 may include one or more registers 1212 communicatively coupled to the core 1202. The registers 1212 may be implemented using dedicated logic gate circuits (e.g., flip-flops) and/or any memory technology. In some embodiments the registers 1212 may be implemented using static memory. The register may provide data, instructions and addresses to the core 1202.

In some embodiments, processor 1200 may include one or more levels of cache memory 1210 communicatively coupled to the core 1202. The cache memory 1210 may provide computer-readable instructions to the core 1202 for execution. The cache memory 1210 may provide data for processing by the core 1202. In some embodiments, the computer-readable instructions may have been provided to the cache memory 1210 by a local memory, for example, local memory attached to the external bus 1216. The cache memory 1210 may be implemented with any suitable cache memory type, for example, Metal-Oxide Semiconductor (MOS) memory such as Static Random Access Memory (SRAM), Dynamic Random Access Memory (DRAM), and/or any other suitable memory technology.

The processor 1200 may include a controller 1214, which may control input to the processor 1200 from other processors and/or components included in a system and/or outputs from the processor 1200 to other processors and/or components included in the system. Controller 1214 may control the data paths in the ALU 1204, FPLU 1206 and/or DSPU 1208. Controller 1214 may be implemented as one or more state machines, data paths and/or dedicated control logic. The gates of controller 1214 may be implemented as standalone gates, FPGA, ASIC or any other suitable technology.

The registers 1212 and the cache 1210 may communicate with controller 1214 and core 1202 via internal connections 1220A, 1220B, 1220C and 1220D. Internal connections may be implemented as a bus, multiplexer, crossbar switch, and/or any other suitable connection technology.

Inputs and outputs for the processor 1200 may be provided via a bus 1216, which may include one or more conductive lines. The bus 1216 may be communicatively coupled to one or more components of processor 1200, for example the controller 1214, cache 1210, and/or register 1212. The bus 1216 may be coupled to one or more components of the system.

The bus 1216 may be coupled to one or more external memories. The external memories may include Read Only Memory (ROM) 1232. ROM 1232 may be a masked ROM, Electronically Programmable Read Only Memory (EPROM) or any other suitable technology. The external memory may include Random Access Memory (RAM) 1233. RAM 1233 may be a static RAM, battery backed up static RAM, Dynamic RAM (DRAM) or any other suitable technology. The external memory may include Electrically Erasable Programmable Read Only Memory (EEPROM) 1235. The external memory may include Flash memory 1234. The External memory may include a magnetic storage device such as disc 1236. In some embodiments, the external memories may be included in a system.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus references to "a", "an", "first", "second" etc. do not preclude a plurality. Reference signs in the claims are provided merely as a clarifying example shall not be construed as limiting the scope of the claims in any way.

**Claims**

1. An audio apparatus comprising:

a receiver (201) arranged to receive an encoded audio data signal comprising a representation of an audio signal, the encoded audio data signal including a latent space feature set representing properties of a signal component of the audio signal;
a first trained artificial neural network (205) arranged to generate at least one frequency parameter reflecting at least one frequency property of the signal component of the audio signal, the first trained artificial neural network arrangement having input nodes receiving the latent space feature set and output nodes providing the at least one frequency parameter;
a pulse sequence generator (207) arranged to generate a pulse sequence, the pulse sequence having properties dependent on the at least one frequency parameter;
a shaping circuit (209) arranged to generate a first audio signal from the pulse sequence, the generation including applying a spectro-temporal shaping to the pulse sequence, the shaping circuit (209) being arranged to adapt the spectro-temporal shaping dependent on the latent space feature set; and an output circuit (211) arranged to generate an output signal from the first audio signal.

2. The audio apparatus of claim 1 wherein the shaping circuit (209) comprises a second trained artificial neural network having input nodes arranged to receive the latent space feature set and an output for producing the spectro-temporal shaping.

3. The audio apparatus of claim 2 wherein the second trained artificial neural network has input nodes for receiving the pulse sequence and output nodes providing samples of the first audio signal.

4. The audio apparatus of claim 2 wherein the second trained artificial neural network is arranged to generate a set of time domain gain parameters and the shaping circuit (209) further comprises a scaler (507, 503) arranged to apply a time domain shaping of the first audio signal by a scaling dependent on the time domain gain parameters.

5. The audio apparatus of claim 4 comprising an upsampling trained artificial neural network (507) having input nodes arranged to receive the time domain gain parameters and output nodes providing time domain scale factors, and wherein the scaler (507, 503) is arranged to scale samples of the first audio signal by the time domain scale factors.

6. The audio apparatus of any of claims 2 to 5 wherein the shaping circuit (209) further comprises a synthesis filter (501) arranged to generate an intermediate signal by filtering of the pulse sequence and to generate the first audio signal from the intermediate signal; the second trained artificial neural network (505) being arranged to generate a set of frequency shaping parameters and the synthesis filter (501) being dependent on the frequency shaping parameters.

7. The audio apparatus of any of claims 2-6 wherein the first trained artificial neural network (205) and the second trained artificial neural network (301, 401) are part of a common trained artificial neural network.

8. The audio apparatus of any of claims 2 to 7 wherein the shaping circuit (209) further comprises a synthesis filter (303) arranged to generate the first audio by filtering the pulse sequence; the second trained artificial neural network (301) being arranged to generate a set of filter parameters and the synthesis filter (303) being dependent on the filter parameters.

9. The audio apparatus of any of the previous claims wherein the pulse sequence generator (207) comprises a second upsampling neural network (603) having input nodes for receiving the at least one frequency parameter and output nodes providing upsampled frequency values for at least one of a fundamental frequency and a harmonic frequency, and the pulse sequence generator (207) is arranged to generate the pulse sequence in dependence on the upsampled pitch frequency values.

10. The audio apparatus of any of the previous claims wherein the latent space feature set represents properties of a first signal component of the audio signal and the encoded audio data signal comprises audio data representing a second signal component of the audio signal and, the second signal component representing a part of the audio signal not represented by the first signal component, and wherein the output circuit (211) is arranged to reconstruct the second signal component by decoding the audio data representing the second signal component, and to generate the output audio signal from a combination of at least the reconstructed second signal component and the first audio signal.

11. An audio apparatus comprising:

a receiver (101) arranged to receive an audio signal;
a signal splitter circuit (105) arranged to divide the audio signal into at least a first signal component and a second signal component, the first signal component comprising sinusoidal signal components;
a parameter circuit (109) arranged to generate a set of parameters representing the first signal component;
a first trained artificial neural network (111) arranged to receive the set of parameters and trained to generate a latent space feature set representing the set of parameters;
an encoder circuit (107) arranged to generate encoded audio data representing the second signal component;
an output circuit (113) arranged to generate an encoded audio data signal representing the audio signal, the encoded audio data signal comprising the latent space feature set and the encoded audio data.

12. The audio apparatus of claim 11 wherein the set of parameters comprise at least one of:

frequency parameters;
pitch parameters;
pitch trajectory parameters;
time domain envelope parameters; and
frequency domain envelope parameters.

13. A method of operation for an audio apparatus, the method comprising:

receiving an encoded audio data signal comprising a representation of an audio signal, the encoded audio data signal including a latent space feature set representing properties of a signal component of the audio signal;
a first trained artificial neural network (205) generating at least one frequency parameter reflecting at least one pitch property of the signal component of the audio signal, the first trained artificial neural network arrangement having input nodes receiving the latent space feature set and output nodes providing the at least one frequency parameter;
generating a pulse sequence having properties dependent on the at least one pitch parameter;
generating a first audio signal from the pulse sequence by applying a spectro-temporal shaping to the pulse sequence;

adapting the spectro-temporal shaping dependent on the latent space feature set; and
generating an output signal from the first audio signal.

14. A method of operation for an audio apparatus, the method comprising:

receiving an audio signal;
dividing the audio signal into at least a first signal component and a second signal component, the first signal component comprising sinusoidal signal components;
generating a set of parameters representing the first signal component;
a first trained artificial neural network (111) receiving the set of parameters and generating a latent space feature set representing the set of parameters;
generating encoded audio data by audio encoding the second signal component; and
generating an encoded audio data signal representing the audio signal to comprise the latent space feature set and the encoded audio data.

15. An encoded audio data signal comprising a representation of an audio signal, the encoded audio data signal including a latent space feature set representing at least one at least one frequency parameter reflecting a pitch property of a sinusoidal signal component of the audio signal and encoded audio data representing a residual signal representing a non-sinusoidal signal component of the audio signal.

**FIG. 1**

FIG. 2

**FIG. 3**

**FIG. 4**

FIG. 5

**FIG. 6**

**FIG. 7**

**FIG. 8**

**FIG. 9**

FIG. 10

$x_0$

$x_1$

$x_2$

$x_3$

...

$x_N$

$l$

$$l = \max\left(0, \sum_n w_n x_n\right)$$

**FIG. 11**

EP 4 697 323 A1

**FIG. 12**

Europäisches
Patentamt

European
Patent Office

Office européen
des brevets

# EUROPEAN SEARCH REPORT

**Application Number**

**EP 24 19 4003**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/048402 A1 (SUNG JONGMO [KR] ET AL) 16 February 2023 (2023-02-16) | 15 | INV.<br>G10L19/00 |
| A | * paragraph [0002] *<br>* paragraph [0047] - paragraph [0066]; figures 1,2 *<br>* paragraph [0071] - paragraph [0087] *<br>* paragraph [0131] - paragraph [0136] *<br>* claims 1,2,4,6,7,9,14 * | 1-14 | G10L25/30<br>G10L19/10<br><br>ADD.<br>G06N3/02<br>G10L25/90<br>G10L19/02 |
| A | US 2020/234725 A1 (GARBACEA CRISTINA [US] ET AL) 23 July 2020 (2020-07-23)<br>* paragraph [0029] - paragraph [0062]; figures 1A,2,3 *<br>* claims 1,10,16-19 * | 1-15 | G10L19/04<br>G10L19/09 |
| A | WO 2023/064735 A1 (QUALCOMM INC [US]) 20 April 2023 (2023-04-20)<br>* paragraph [0047] - paragraph [0081]; figure 3 *<br>* claims 1,2,9 * | 1-15 | |
| A | CN 117 219 099 A (TENCENT TECH SHENZHEN CO LTD) 12 December 2023 (2023-12-12)<br>* Page 42, third paragraph - Page 49, sixth paragraph (translation); figure 7B *<br>* claims 1-20 * | 1-15 | TECHNICAL FIELDS SEARCHED (IPC)<br><br>G10L<br>G06N |
| A | US 2023/016637 A1 (SCHMIDT KONSTANTIN [DE] ET AL) 19 January 2023 (2023-01-19)<br>* paragraph [0075] - paragraph [0101]; figure 1 *<br>* claims 1-14 * | 1-15 | |

The present search report has been drawn up for all claims

| Place of search | Date of completion of the search | Examiner |
|---|---|---|
| Munich | 10 January 2025 | Virette, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 4003

This annex lists the patent family members relating to the patent documents cited in the above-mentioned European search report.
The members are as contained in the European Patent Office EDP file on
The European Patent Office is in no way liable for these particulars which are merely given for the purpose of information.

10-01-2025

| Patent document cited in search report | | Publication date | Patent family member(s) | | Publication date |
|---|---|---|---|---|---|
| US 2023048402 | A1 | 16-02-2023 | NONE | | |
| US 2020234725 | A1 | 23-07-2020 | US | 2020234725 A1 | 23-07-2020 |
| | | | US | 2022319527 A1 | 06-10-2022 |
| | | | WO | 2020148435 A1 | 23-07-2020 |
| WO 2023064735 | A1 | 20-04-2023 | CN | 118077003 A | 24-05-2024 |
| | | | EP | 4416726 A1 | 21-08-2024 |
| | | | KR | 20240087809 A | 19-06-2024 |
| | | | TW | 202324382 A | 16-06-2023 |
| | | | US | 2024428813 A1 | 26-12-2024 |
| | | | WO | 2023064735 A1 | 20-04-2023 |
| CN 117219099 | A | 12-12-2023 | NONE | | |
| US 2023016637 | A1 | 19-01-2023 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Y. STYLIANOU**. Efficient Decomposition of Speech Signals Into a Deterministic and a Stochastic Part. *Fourth International Symposium on Signal Processing and Its Applications, Gold Coast, QLD, Australia*, 1996, 5-8
- **ZHENG, CHENGYU et al.** Interactive speech and noise modeling for speech enhancement.. *Proceedings of the AAAI Conference on Artificial Intelligence*, 2021, vol. 35 (16)
- **TIMOTHY S. STILSON** ; **JULIUS ORION SMITH**. Alias-Free Digital Synthesis of Classic Analog Waveforms. *International Conference on Mathematics and Computing*, 1996
- **AARON VAN DEN OORD** ; **ORIOL VINYALS** ; **KORAY KAVUKCUOGLU**. Neural Discrete Representation Learning. *arXiv 1711.00937*, 2018

- **TIM STILSON** ; **JULIUS SMITH**. Alias-free digital synthesis of classic analog waveforms. *Proc. of the Int. Computer Music Conference (ICMC)*, 1996
- **XAVIER GLOROT** ; **ANTOINE BORDES** ; **YOSHUA BENGIO**. *Proceedings of the Fourteenth International Conference on Artificial Intelligence and Statistics, PMLR*, 2011, vol. 15, 315-323
- **OORD, AARON VAN DEN** ; **SANDER DIELEMAN** ; **HEIGA ZEN** ; **KAREN SIMONYAN** ; **ORIOL VINYALS** ; **ALEX GRAVES** ; **NAL KALCHBRENNER** ; **ANDREW SENIOR** ; **KORAY KAVUKCUOGLU**. Wavenet: A generative model for raw audio.. *arXiv: 1609.03499*, 2016